# EUROPEAN PATENT APPLICATION

(11) **EP 3 605 961 A1**
(43) Date of publication of application: **05.02.2020**
(21) Application number: 18775841.2
(22) Date of filing: 19.03.2018
(51) Int. Cl.: H04L 12/46, H04L 12/70, H04L 29/12

(54) **COMMUNICATION DEVICE AND COMMUNICATION SYSTEM**

(30) Priority: 29.03.2017 JP 2017066464
(71) Applicant: Panasonic Intellectual Property Management Co., Ltd., Osaka-shi, Osaka 540-6207 (JP)
(72) Inventor: SUZUKI Yousuke, Osaka 540-6207 (JP)
(74) Representative: Grünecker Patent- und Rechtsanwälte PartG mbB
(86) International application number: PCT/JP2018/010691
(87) International publication number: WO 2018/180661

(57) **Abstract**

A communication device (100) includes: communicator (101) that transmits a confirmation signal; and controller (102) that controls a DHCP server function, in which controller (102): transmits a first confirmation signal to an other communication device through communicator (101); starts the DHCP server function and transmits a second confirmation signal to the other communication device through communicator (101) when a first response signal is not received from the other communication device in response to the first confirmation signal; stops the DHCP server function when a second response signal is received in response to the second confirmation signal; and performs a transmission control of a third confirmation signal to the other communication device through communicator (101), based on the second response signal.

## Description

### TECHNICAL FIELD

The present disclosure relates to a communication device and a communication system.

### BACKGROUND ART

DHCP (Dynamic Host Configuration Protocol) server devices are used to simplify the setting of IP (Internet Protocol) addresses for clients connected to networks.

Moreover, a technique is disclosed to prevent the occurrence of duplicate allocation of IP addresses in a system that allocates the IP addresses to clients by using multiple DHCP server devices (for example, see PTL 1).

An IP address allocation system described in PTL 1 is an IP address allocation system that allocates IP addresses to clients by using multiple DHCP server devices allocatable to a first network. Each of the DHCP server devices stores an IP address range from the address range of the overall network, that is, the overall range of the IP addresses of the first network. The stored IP address range is allocatable to clients and does not overlap with the IP address range of the other DHCP server devices. When an allocation request for an IP address is received from a client, an IP address included in the address range not overlapping with the IP address range of the other server devices is allocated to the client with a specified lease period that is a period from the allocation to the release of the IP address. Moreover, when an extension request for the lease period of an existing IP address allocated from a client is received, permission to extend the lease period is transmitted to the client regardless of whether or not the existing IP address is included in the address range not overlapping with the IP address range of the other server devices.

### Citation List

### Patent Literature

PTL 1: Japanese Unexamined Patent Application Publication No. 2012-249213

### SUMMARY OF THE INVENTION

### TECHNICAL PROBLEM

The present disclosure provides a communication device and a communication system, by which if a plurality of communication devices having a DHCP server function are provided on the same network, the absence of the communication device having started a DHCP server on the network is prevented.

### SOLUTION TO PROBLEM

A communication device according to the present disclosure is a communication device in a communication system including a plurality of communication devices on a network, the plurality of communication devices each having a Dynamic Host Configuration Protocol (DHCP) server function of allocating an Internet Protocol (IP) address, the communication device including: a communicator that transmits a confirmation signal for confirming presence or absence of an other communication device having the DHCP server function started on the network; and a controller that controls the DHCP server function, in which the controller: transmits a first confirmation signal to the other communication device through the communicator; starts the DHCP server function and transmits a second confirmation signal to the other communication device through the communicator when a first response signal is not received from the other communication device in response to the first confirmation signal; stops the DHCP server function when a second response signal is received in response to the second confirmation signal; and performs a transmission control of a third confirmation signal to the other communication device through the communicator, based on the second response signal.

Furthermore, a communication system according to the present disclosure is a communication system, including a plurality of communication devices each of which is the above communication device on a network.

### ADVANTAGEOUS EFFECT OF INVENTION

The communication device or the like of the present disclosure makes it possible to prevent the absence of communication devices having started the DHCP function on the network if the communication devices having the DHCP server function are provided on the same network.

### BRIEF DESCRIPTION OF DRAWINGS

FIG. 1 is a block diagram showing the configuration of a system including communication devices according to embodiment 1.
FIG. 2 is a flowchart showing a specific example of the steps of confirming the presence or absence of a DHCP server on a network by the communication device of embodiment 1.
FIG. 3 is a flowchart showing a specific example of steps in which if the communication device of embodiment 1 stops a DHCP server function, the communication device determines whether to transmit a confirmation signal for confirming the presence or absence of the DHCP server on the network.
FIG. 4 is a sequence showing a specific example of the steps of determining the communication device for starting the DHCP server function to be performed by the communication devices provided in a communication system according to embodiment 1.
FIG. 5 is a block diagram showing the configuration of a system including communication devices according to embodiment 2.
FIG. 6 is a flowchart showing a specific example of the steps of calculating the transmission time of the confirmation signal for confirming the presence or absence of the DHCP server on the network by the communication device of embodiment 2.
FIG. 7 is a flowchart showing another specific example of the steps of calculating the transmission time of the confirmation signal for confirming the presence or absence of the DHCP server on the network by the communication device of embodiment 2.
FIG. 8 is a sequence showing another specific example of the steps of transmitting the confirmation signal by the communication device having stopped the DHCP server function to be performed by the communication devices provided in a communication system according to embodiment 2.
FIG. 9 is a block diagram showing the configuration of a system including communication devices according to embodiment 3.
FIG. 10 is a flowchart showing a specific example of the steps of switching the states of communications with an access point by the communication device of embodiment 3.
FIG. 11 is a block diagram showing the configuration of a system including communication devices according to another embodiment.

### DESCRIPTION OF EXEMPLARY EMBODIMENTS

### (Fundamental findings of the present disclosure)

The points of view of the inventors will be first described below.

DHCP servers are used to simplify the setting of IP addresses for client devices connected to a network. In some cases, a plurality of DHCP servers are provided on the same network.

On the same network, a communication device having a DHCP server function may act as a DHCP server instead of a fixed DHCP server acting as a permanent DHCP server. In this case, for example, the communication device broadcasts a confirmation signal to confirm the presence or absence of a DHCP server on the network. If it is determined that the DHCP server is absent on the network, the communication device acts as the DHCP server and controls the allocation of an IP address to each device on the network. If it is determined that a DHCP server is present on the network, the communication device does not act as a DHCP server and does not control the allocation of an IP address to each device on the network.

For example, in the presence of a plurality of communication devices capable of acting as DHCP servers on the same network, all the communication devices act as DHCP servers if the DHCP server is absent on the network at the transmission of the confirmation signal by the communication devices at the same time.

The communication devices capable of acting as DHCP servers repeatedly transmit the confirmation signal even after acting as DHCP servers, thereby determining the presence or absence of the DHCP server on the network. If it is determined that the DHCP server is present on the network, the communication devices do not act as DHCP servers and do not control the allocation of an IP address to each device on the network. This can prevent duplicate allocation of IP addresses to client devices in the presence of a plurality of DHCP servers on the same network.

In the presence of two communication devices acting as DHCP servers on the same network, if a DHCP server is present on the network, none of the communication devices acts as a DHCP server when the confirmation signal is transmitted at the same time. In other words, a DHCP server having the function of allocating an IP address to a client device is not present on the network. Thus, if a client device is added on the network, the device cannot obtain an IP address.

In view of the problem, the inventors have devised the present disclosure.

Embodiments will be specifically described below by optionally referring to the accompanying drawings. A detailed explanation may be omitted if necessary. For example, a detailed explanation of known matters or a redundant explanation of substantially the same configurations may be omitted. This will avoid an unnecessary explanation and enhance understanding of a person skilled in the art.

The inventors provide the accompanying drawings and the following explanation in order to sufficiently deepen the understanding of a person skilled in the art about the present disclosure. The inventors do not intend to limit the subject matters of claims.

### (Embodiment 1)

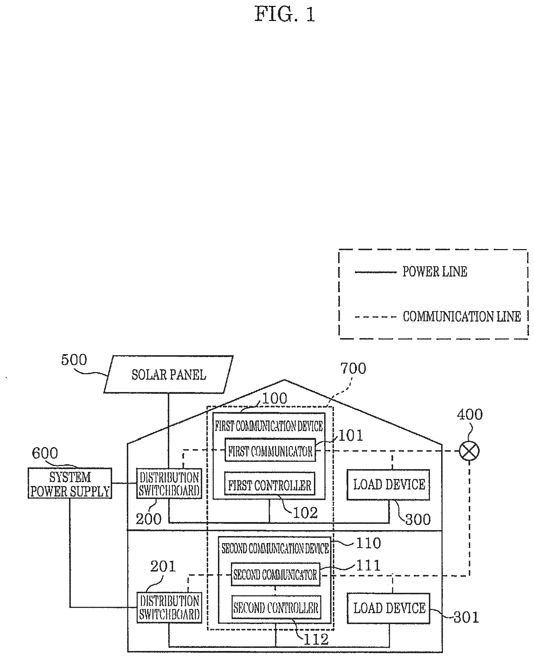

Referring to FIGS. 1 to 4, embodiment 1 will be described below.

### [1-1. Configuration]

FIG. 1 is a block diagram showing communication system 700 including communication device 100 according to embodiment 1.

As shown in FIG. 1, communication device (first communication device) 100 is installed in, for example, a house and is electrically connected to solar panel 500, distribution switchboard 200 electrically connected to system power supply 600 acting as an external commercial power supply, and load device 300 such as an electrical appliance via power lines. Communication device 100 is connected to distribution switchboards 200 and 201 and load devices 300 and 301 via communication lines so as to communicate therewith. Communication device 100 is a communication device having a DHCP (Dynamic Host Configuration Protocol) server function that can allocate IP (Internet protocol) addresses to, for example, distribution switchboards 200 and 201 and load devices 300 and 301 on network 400. Communication device 100 is a so-called house controller applied to a HEMS (Home Energy Management System) that acquires, for example, the power consumption of load device 300 or the like and notifies a user of communication device 100 of the power consumption.

Distribution switchboard 200 and load device 300 are client devices that can communicate with the communication device (first communication device 100 or second communication device 110) and acquire IP addresses from the communication device acting as a DHCP server.

Communications between communication device 100 and distribution switchboards 200 and 201 and load devices 300 and 301 are not limited to communications via communication lines. For example, communication device 100 may be connected to distribution switchboard 200 and load device 300 by radio communications.

Communication device 100 includes communicator (first communicator) 101 and controller (first controller) 102.

Communicator 101 is a communication interface for communications between communication device 100 and distribution switchboards 200 and 201 and load devices 300 and 301. Communicator 101 also acts as a communication interface for transmitting the confirmation signal for determining the presence or absence of other communication devices having started the DHCP server function on network 400. The DHCP server function is a function of allocating an IP address to a client device connected to network 400, for example, load device 300.

Controller 102 is a controller for controlling the DHCP server function.

Controller 102 is implemented by, for example, a CPU (Central Processing Unit) and control programs stored in memory (not shown) such as ROM (Read Only Memory), RAM (Random Access Memory), an HDD (Hard Disk Drive), and an SSD (Solid State Drive) in communication device 100.

For example, in response to an IP address request from load device 300, controller 102 allocates IP addresses stored in the memory to load device 300. Specifically, controller 102 transmits the IP address to load device 300 through communicator 101.

Controller 102 transmits the confirmation signal to the other communication device (second communication device 110 in the present embodiment) through communicator 101. Specifically, controller 102 broadcasts a first confirmation signal, which is an example of the confirmation signal, to network 400 through communicator 101. If a first response signal is not received from second communication device 110 in response to the first confirmation signal, controller 102 determines that the other communication device having started the DHCP server function is absent on network 400, and then starts the DHCP server function.

Furthermore, controller 102 transmits a second confirmation signal, which is another example of the confirmation signal, to the other communication device through communicator 101. If a second response signal is received in response to the second confirmation signal, controller 102 stops the DHCP server function. Moreover, controller 102 transmits a third confirmation signal, which is another example of the confirmation signal, through communicator 101 to the other communication device that is the source of the received second response signal.

For example, if second communication device 110 having started the DHCP server function receives the second confirmation signal from first communication device 100, the IP address allocated to first communication device 100 is transmitted as the second response signal. First communication device 100 uses the received IP address as the IP address of first communication device 100.

Moreover, controller 102 controls the transmission of the third confirmation signal to the other communication device through communicator 101, based on the second response signal. The second response signal includes the MAC (Media Access Control) address of the other communication device having transmitted the second response signal. When controller 102 having stopped the DHCP server function receives the second response signal, controller 102 further controls the transmission of the third confirmation signal through communicator 101, according to the MAC address included in the second response signal.

For example, when the received MAC address is larger than the MAC address of communication device 100, controller 102 further transmits the third confirmation signal through communicator 101. Alternatively, when the received MAC address is smaller than the MAC address of communication device 100, controller 102 further transmits the third confirmation signal through communicator 101.

Thus, in the transmission control, the transmission of the third confirmation signal through communicator 101 is controlled under predetermined conditions according to the MAC address of communication device 100 and the MAC address of the source of the second response signal.

For example, when the received MAC address is larger than the MAC address of communication device 100, controller 102 does not immediately transmit the third confirmation signal but transmits the third confirmation signal through communicator 101 after a predetermined time elapses. Alternatively, when the received MAC address is smaller than the MAC address of communication device 100, controller 102 does not immediately transmit the third confirmation signal but transmits the third confirmation signal through communicator 101 after a predetermined time elapses. In this case, the predetermined time may be optionally determined in advance. For example, the predetermined time may be 20 seconds, 20 seconds or less, or 20 seconds or more. Alternatively, controller 102 may determine the predetermined time by calculating from the MAC address of controller 102 or generate a random number to determine the predetermined time from the generated random number as in, for example, communication device 100a according to embodiment 2, which will be discussed later.

If communication device 100 is the house controller, controller 102 controls devices on network 400. For example, controller 102 obtains the power consumption of load device 300 or the like through communicator 101. In this case, communication device 100 may further include a display (not shown) for notifying a user of communication device 100 of the power consumption.

Communication system 700 includes the communication devices of embodiment 1 on the same network 400. The two communication devices are provided in communication system 700 according to the present embodiment. The number of communication devices is not particularly limited. In the following explanation, the two communication devices provided in communication system 700 according to the present embodiment will be referred to as first communication device 100 and second communication device 110.

Second communication device 110 is disposed on network 400 like first communication device 100 and is connected to first communication device 100 while enabling communications therebetween. Second communication device 110 includes second communicator 111 and second controller 112. Second communicator 111 is a communication interface having the same functional configuration as communicator (first communicator) 101. Moreover, second controller 112 is a controller implemented by a CPU and a control program stored in memory (not shown) provided in second communication device 110. Second controller 112 has the same functional configuration as controller (first controller) 102.

Second communication device 110 is installed in, for example, the same house as first communication device 100 and is electrically connected to distribution switchboard 201, which is electrically connected to system power supply 600, and load device 301 such as an electrical appliance via power lines. Moreover, second communication device 110 is connected so as to communicate with distribution switchboards 200 and 201 and load devices 300 and 301 via communication lines. Second communication device 110 is a communication device having the DHCP server function that can allocate IP addresses to, for example, distribution switchboards 200 and 201 and load devices 300 and 301 on network 400.

As described above, communication system 700 includes first communication device 100 and second communication device 110 that have the DHCP server function on the same network 400. Communication system 700 is applied to, for example, a house controller system including a plurality of house controller as communication devices for controlling different electrical appliances in the homes of so-called two-family housing on the same network 400. In this case, each of first communication device 100 and second communication device 110 can allocate IP addresses to distribution switchboard 200, distribution switchboard 201, load device 300, and load device 301.

### [1-2. Operation]

The operations of communication system 700 including first communication device 100 and second communication device 110 that are configured thus will be described below.

First communication device 100 repeatedly transmits the first confirmation signal a predetermined number of times through first communicator 101. If it is determined that the DHCP server is absent on network 400, the DHCP server function is started such that first communication device 100 acts as a DHCP server. Furthermore, first communication device 100 repeatedly transmits the second confirmation signal the predetermined number of times through communicator 101. If it is determined that the DHCP server is present on the network, the IP address allocated to communication device 100 from the DHCP server is acquired and the DHCP server function is stopped such that communication device 100 does not act as a DHCP server. Thereafter, first communication device 100 repeatedly transmits the third confirmation signal the predetermined number of times through communicator 101. The number of times of transmission of the confirmation signal is not particularly limited and thus may be, for example, one, three, or five. Alternatively, the first confirmation signal, the second confirmation signal, and the third confirmation signal may be each repeatedly transmitted a different number of times. If the confirmation signal is transmitted the predetermined number of times and the response signal is not received in response to the confirmation signal, controller 102 determines that a fixed DHCP server or the other communication device having started the DHCP server function is absent on network 400. The operations will be specifically discussed below.

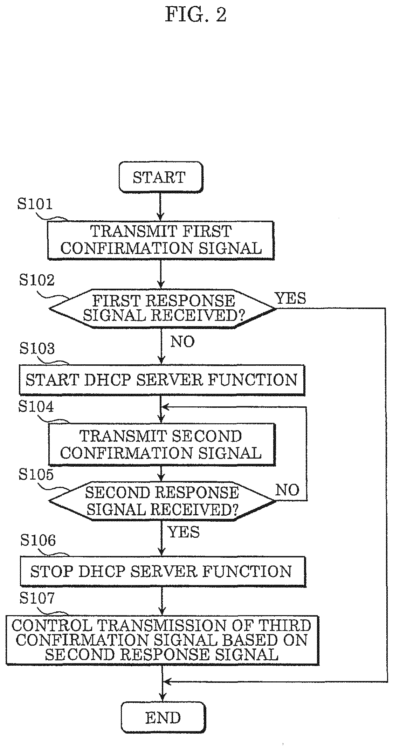

FIG. 2 is a flowchart showing a specific example of the steps of confirming the presence or absence of the DHCP server on the network by the communication device of embodiment 1. First communication device 100 and second communication device 110 perform the same operations and thus only first communication device 100 will be discussed below.

Controller 102 broadcasts the first confirmation signal to network 400 through communicator 101 (step S101). This allows controller 102 to confirm the presence or absence of the fixed DHCP server or the other communication device having started the DHCP server function on network 400. Controller 102 repeatedly transmits, for example, DHCP DISCOVER as the first confirmation signal.

Subsequently, controller 102 determines whether or not the first response signal is received in response to the first confirmation signal (step S102). If the first response signal is received (Yes at step S102), controller 102 determines that the fixed DHCP server or the other communication device having started the DHCP server function is present on network 400, and then controller 102 acquires the IP address included in the first response signal.

If the first response signal is not received (No at step S102), controller 102 determines that the fixed DHCP server or the other communication device having started the DHCP server function is absent on network 400, and then controller 102 starts the DHCP server function (step S103). In other words, communication device 100 acts as the DHCP server. Moreover, in step S103, communication device 100 allocates one of the IP addresses of communication device 100 to communication device 100.

Then, controller 102 broadcasts the second confirmation signal to network 400 through communicator 101 (step S104). Controller 102 repeatedly transmits, for example, DHCP DISCOVER as the second confirmation signal.

Subsequently, controller 102 determines whether or not the second response signal is received in response to the second confirmation signal (step S105). If the second response signal is not received (No at step S105), controller 102 broadcasts the second confirmation signal to network 400 through communicator 101 (step S104).

If the second response signal is received (Yes at step S105), controller 102 determines that the other communication device having started the DHCP server function is present on network 400, and then controller 102 acquires the IP address included in the second response signal and stops the DHCP server function (step S106). For example, controller 102 transmits DHCP DISCOVER as the second confirmation signal through communicator 101 and receives, as the second response signal, DHCP OFFER including the MAC address of the source of the response signal and the IP address allocated to communication device 100. If DHCP OFFER is received as the second response signal, controller 102 transmits DHCP REQUEST for requesting permission to use the received IP address, to the MAC address of the source through communicator 101. If DHCP ACK is received as the response signal of DHCP REQUEST, controller 102 acquires and uses the received IP address as the IP address of communication device 100. In other words, in step S103, communication device 100 does not use the IP address allocated to communication device 100 but uses the IP address received in step S105.

Subsequently, controller 102 controls the transmission of the third confirmation signal to the MAC address of the source of the second response signal through communicator 101 based on the second response signal received in step S105 (step S107). Specifically, in step S107, controller 102 determines whether to transmit, for example, DHCP REQUEST as the third confirmation signal based on the MAC address included in the second response signal. Thus, controller 102 determines whether or not the other communication device having started the DHCP server function on network 400 currently acts as the DHCP server.

The operations are also performed by second communication device 110.

In the following explanation, if the DHCP server function is stopped, controller 102 determines whether to transmit the third confirmation signal for confirming the presence or absence of the DHCP server on network 400.

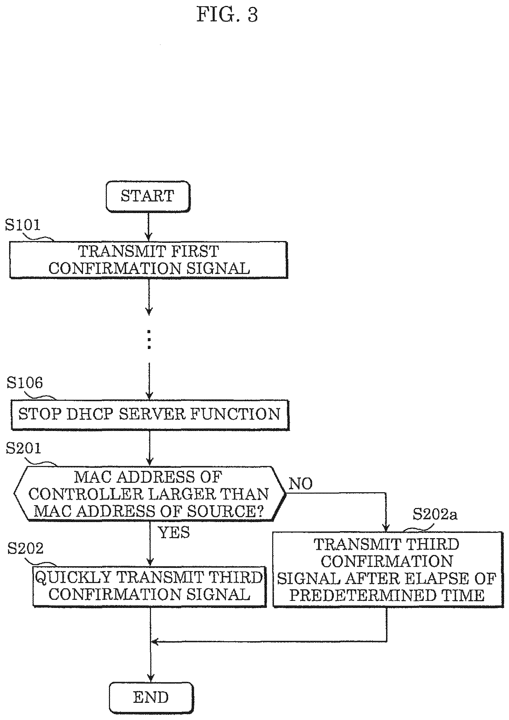

FIG. 3 is a flowchart showing a specific example of steps in which if the communication device of embodiment 1 stops the DHCP server function, the communication device determines whether to transmit the third confirmation signal for confirming the presence or absence of the DHCP server on the network.

Controller 102 performs the operations of steps S101 to S105 in FIG. 2.

If the second response signal is received (Yes at step S105 in FIG. 2), controller 102 determines that the other communication device having started the DHCP server function is present on network 400, and then controller 102 acquires the IP address included in the second response signal and stops the DHCP server function (step S106).

Controller 102 then compares the MAC address of controller 102 (communication device 100) and the MAC address of the source of the second response signal. Specifically, controller 102 determines whether or not the MAC address of controller 102 is larger than the MAC address of the source of the second response signal (step S201).

If controller 102 determines that the MAC address of controller 102 is larger than the MAC address of the source of the second response signal (Yes at step S201), controller 102 immediately transmits, through communicator 101, the third confirmation signal to the MAC address of the source of the second response signal received in step S105 (step S202).

If controller 102 determines that the MAC address of controller 102 is smaller than the MAC address of the source of the second response signal (No at step S201), controller 102 transmits the third confirmation signal after the elapse of a predetermined time (step S202a).

The operations are also performed by second communication device 110. The MAC address is stored in advance as a different numeric value for each device. This continuously transmits the confirmation signal and the response signal between the communication devices provided in communication system 700, thereby preventing the repetition of the start and stop of the DHCP server function.

In step S201, controller 102 determines whether or not the MAC address of controller 102 is larger than the MAC address of the source of the second response signal. The present invention is not limited to this process. In step S201, controller 102 may determine whether or not the MAC address of controller 102 is smaller than the MAC address of the source of the second response signal. In this case, if controller 102 in step S202 determines that the MAC address of controller 102 is smaller than the MAC address of the source of the second response signal, controller 102 immediately transmits, through communicator 101, the third confirmation signal to the MAC address of the source of the second response signal received in step S105. If controller 102 in step S202a determines that the MAC address of controller 102 is larger than the MAC address of the source of the second response signal, controller 102 transmits the third confirmation signal after a predetermined time. The criterion may be determined in advance for each of the communication devices provided in communication system 700.

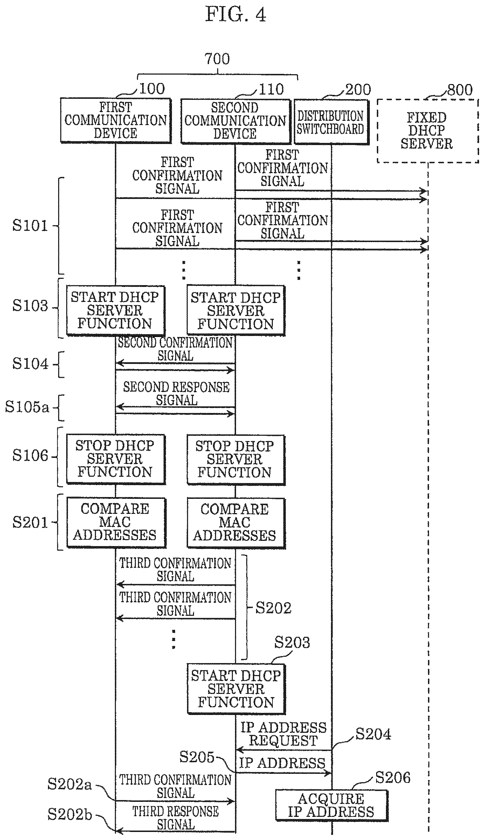

FIG. 4 is a sequence showing a specific example of the steps of determining the communication device for starting the DHCP server functions performed by the communication devices provided in communication system 700 according to embodiment 1. In FIG. 4, in substantially the same steps as those of the flowcharts of FIGS. 2 and 3, the same reference numerals are used and the explanation of the steps may be omitted.

First communication device 100 and second communication device 110 repeatedly broadcast the first confirmation signal to network 400 (step S101). Thus, first communication device 100 and second communication device 110 confirm the presence or absence of fixed DHCP server 800 having the DHCP server function started all the time or the other communication device having started the DHCP server function on network 400. In embodiment 1, fixed DHCP server 800 is absent on network 400.

Subsequently, first communication device 100 and second communication device 110 determine whether or not the first response signal is received (step S102 in FIG. 2).

Thereafter, if the first response signal is not received (No at step S102 in FIG. 2), first communication device 100 and second communication device 110 determine that fixed DHCP server 800 or the other communication device having started the DHCP server function is absent on network 400, and then the communication devices start the DHCP server function (step S103).

First communication device 100 and second communication device 110 then broadcast the second confirmation signal to network 400 (step S104).

If the second response signal is received (step S105a), first communication device 100 and second communication device 110 determine that the other communication device having started the DHCP server function is present on network 400, and then the communication devices acquire the IP address included in the second response signal and stops the DHCP server function (step S106).

First communication device 100 and second communication device 110 then compare the MAC addresses of the communication devices and the MAC address of the source of the second response signal. For example, first communication device 100 determines whether or not the MAC address of first communication device 100 is larger than the MAC address of second communication device 110 (step S201). Likewise, in step S201, second communication device 110 determines whether or not the MAC address of second communication device 110 is larger than the MAC address of first communication device 100. In the present embodiment, a criterion is stored in first communication device 100 and second communication device 110 so as to transmit the third confirmation signal from one of the communication devices with a larger MAC address. In the following explanation, the MAC address of first communication device 100 is smaller than the MAC address of second communication device 110.

In step S201, first communication device 100 determines that the MAC address of first communication device 100 is smaller than the MAC address of second communication device 110 and completes the operation.

Moreover, in step S201, second communication device 110 determines that the MAC address of second communication device 110 is larger than the MAC address of first communication device 100 and repeatedly transmits the third confirmation signal to first communication device 100 (step S202).

Thereafter, if the third response signal is not received in response to the third confirmation signal, second communication device 110 determines that first communication device 100 has not started the DHCP server function and starts the DHCP server function (step S203).

Thus, if distribution switchboard 200 broadcasts, for example, an IP address request to network 400 (step S204), second communication device 110 can allocate an IP address to distribution switchboard 200 (step S205). In this way, distribution switchboard 200 can acquire the IP address (step S206).

If communication device 100 determines that the MAC address of communication device 100 is smaller than the MAC address of the source of the second response signal, communication device 100 transmits the third confirmation signal after the predetermined time (step S202a). Thus, from second communication device 110 having started the DHCP server function, first communication device 100 receives the third response signal in response to the third confirmation signal (step S202b), so that first communication device 100 determines that second communication device 110 has started the DHCP server, and does not start the DHCP server function of first communication device 100.

### [1-3. Effects]

As described above, in this embodiment, communication device 100 is a communication device in communication system 700 including a plurality of communication devices on network 400, the plurality of communication devices each having a Dynamic Host Configuration Protocol (DHCP) server function of allocating an Internet Protocol (IP) address. Communication device 100 includes communicator 101 that transmits a confirmation signal for confirming presence or absence of an other communication device having the DHCP server function started on network 400. Communication device 100 also includes controller 102 that controls the DHCP server function. Controller 102: transmits a first confirmation signal to the other communication device through communicator 101; and starts the DHCP server function and transmits a second confirmation signal to the other communication device through communicator 101 when a first response signal is not received from the other communication device in response to the first confirmation signal. In contrast, controller 102: stops the DHCP server function when a second response signal is received in response to the second confirmation signal; and performs a transmission control of a third confirmation signal to the other communication device through communicator 101, based on the second response signal.

With this configuration, controller 102 can continuously confirm whether or not the other communication device having started the DHCP server function on network 400 continuously acts as a DHCP server. This can prevent the absence of communication devices having started the DHCP server function on network 400.

Furthermore, the second response signal includes a Media Access Control (MAC) address of the other communication device which has transmitted the second response signal, and controller 102 may perform the transmission control according to the MAC address.

Thus, even if a plurality of communication devices having identical configurations are present on the same network 400, the devices have different MAC addresses as criteria for controlling the transmission of the third confirmation signal, enabling simple transmission control in different ways.

For example, during the transmission control of the third confirmation signal, controller 102 may transmit the third confirmation signal through communicator 101 when the MAC address of second communication device 110 is larger than the MAC address of first communication device 100. Furthermore, for example, during the transmission control of the third confirmation signal, controller 102 may transmit the third confirmation signal through communicator 101 after an elapse of a predetermined time when the MAC address of second communication device 110 is smaller than the MAC address of communication device 100.

Furthermore, for example, during the transmission control of the third confirmation signal, controller 102 may transmit the third confirmation signal through communicator 101 when the MAC address of second communication device 110 is smaller than the MAC address of communication device 100. Furthermore, for example, during the transmission control of the third confirmation signal, controller 102 may transmit the third confirmation signal through communicator 101 after an elapse of a predetermined time when the MAC address of second communication device 110 is larger than the MAC address of communication device 100.

With this configuration, even if a plurality of communication devices (first communication device 100 and second communication device 110 in embodiment 1) on the same network 400, any one of the communication devices starts the DHCP server function. Furthermore, even if the DHCP server functions of two or more of the communication devices are stopped, any one of the communication devices confirms the communication device having started the DHCP server function on network 400. Thus, all of the communication devices on the same network 400 do not need to transmit the third confirmation signal for confirming the communication device having started the DHCP server function. This can prevent the traffic of the communication devices provided in communication system 700.

With this configuration, communication device 100 can switch between the transmission of the third confirmation signal immediately in response to the MAC address and the transmission of the third confirmation signal after the elapse of the predetermined time instead of immediately transmitting the third confirmation signal. Thus, with this configuration, even if the communication device to immediately transmit the third confirmation signal does not transmit the third confirmation signal due to, for example, an error in communication system 700 including the communication devices according to embodiment 1, the other communication devices transmit the third confirmation signal after the elapse of the predetermined time. Thus, communication system 700 can prevent the simultaneous starting of the DHCP server functions by the communication devices according to embodiment 1 and the absence of the communication device having started the DHCP server function.

Moreover, in the present embodiment, communication system 700 includes multiple communication devices 100 on the same network 400. Communication system 700 includes first communication device 100 and second communication device 110 in the present embodiment.

In other words, in communication system 700, the control function provided in the case where multiple communication devices having the DHCP server functions exist on the same network 400 can prevent the absence of the communication device having started the DHCP server function on network 400.

### (Embodiment 2)

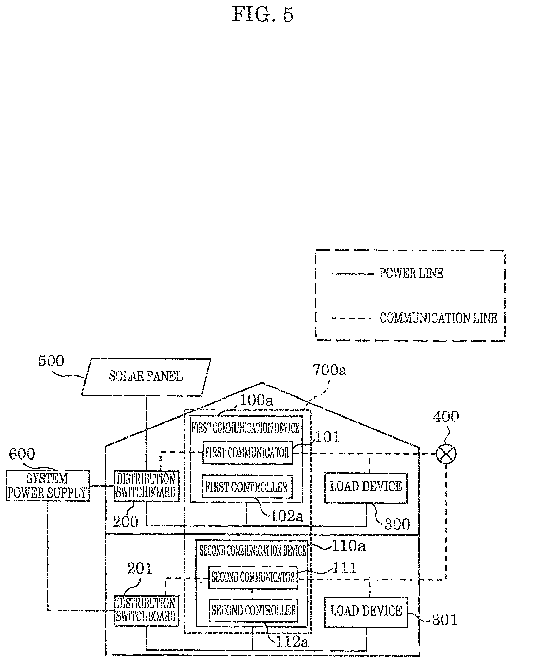

Referring to FIGS. 5 to 8, embodiment 2 will be described below. Substantially the same configurations as embodiment 1 are indicated by the same reference numerals and the redundant explanation thereof may be omitted or simplified.

### [2-1. Configuration]

FIG. 5 is a block diagram showing the configuration of a system including communication devices according to embodiment 2.

Communication device (first communication device) 100a is electrically connected to distribution switchboard 200, which is electrically connected to solar panel 500 and system power supply 600, and load device 300 such as an electrical appliance via power lines. Communication device 100a is connected so as to communicate with distribution switchboards 200 and 201 and load devices 300 and 301 via communication lines. Communication device 100a has a DHCP server function and can allocate IP addresses to, for example, distribution switchboards 200 and 201 and load devices 300 and 301 on network 400. Communication device 100a is a so-called house controller applied to a HEMS that acquires, for example, the power consumption of load device 300 or the like and notifies a user of communication device 100a of the power consumption.

Distribution switchboards 200 and 201 and load devices 300 and 301 are client devices that acquire IP addresses from one of first communication device 100a or second communication device 110a, each having started the DHCP server function.

Communications between communication device 100a and distribution switchboards 200 and 201 and load devices 300 and 301 are not limited to communications via communication lines. For example, communication device 100a may be connected to distribution switchboards 200 and 201 and load devices 300 and 301 by radio communications.

Communication device 100a includes communicator (first communicator) 101a and controller (first controller) 102a.

Like communicator 101, communicator 101a acts as a communication interface for communications between communication device 100a and the other communication device (e.g., second communication device 110a), distribution switchboard 200, and load device 300 or the like on network 400.

Controller 102a is a controller for controlling the DHCP server function. Controller 102a is implemented by, for example, a CPU and control programs stored in memory (not shown) such as ROM, RAM, an HDD, and an SSD in communication device 100a.

For example, in response to an IP address request from load device 300, controller 102a allocates IP addresses stored in the memory to load device 300.

Controller 102a transmits a first confirmation signal to the other communication device (second communication device 110a in embodiment 2) through communicator 101a. Specifically, controller 102a broadcasts a first confirmation signal to network 400 through communicator 101a. If a first response signal is not received from second communication device 110a, controller 102a determines that the other communication device having started the DHCP server function is absent on network 400, and then starts the DHCP server function.

Furthermore, controller 102a transmits a second confirmation signal to the other communication device through communicator 101a. If a second response signal is received, controller 102a stops the DHCP server function. Specifically, controller 102a broadcasts the second confirmation signal to network 400 through communicator 101a. If the second response signal is received, controller 102a stops the DHCP server function.

Moreover, controller 102a controls the transmission of a third confirmation signal to the other communication device through communicator 101, based on the second response signal. Specifically, controller 102a transmits the third confirmation signal to the other communication device through communicator 101a after the elapse of a predetermined time from the reception time of the second response signal.

For example, if the DHCP server function is stopped, controller 102a transmits the third confirmation signal through communicator 101a after the elapse of a time corresponding to the MAC address of communication device 100a from the reception of the second response signal. The predetermined time is determined in advance for each of the communication devices of embodiment 2 according to the MAC address.

For example, if the DHCP server function is stopped, controller 102a receives the second response signal and then generates a random number to determine the predetermined time according to the random number. In short, controller 102a may generate a random number and determine the predetermined time according to the random number. For example, controller 102a may generate a five-digit random number from the MAC address of communication device 100a and determine the milliseconds of the generated five-digit random number as the predetermined time.

Controller 102a may include a timer (not shown), e.g., a RTC (Real Time Clock) for measuring the predetermined time.

Communication system 700a includes the communication devices of embodiment 2 on the same network 400. The number of communication devices is two in communication system 700a according to embodiment 2. The number of communication devices is not particularly limited. In the following explanation, the two communication devices provided in communication system 700a according to the present embodiment will be referred to as first communication device 100a and second communication device 110a.

Second communication device 110a is disposed on network 400 like first communication device 100a and is connected so as to communicate with first communication device 100a. Second communication device 110a includes second communicator 111a and second controller 112a. Second communicator 111a is a communication interface having the same functional configuration as communicator (first communicator) 101a. Moreover, second controller 112a is a controller implemented by a CPU and a control program stored in memory (not shown) provided in second communication device 110a. Second controller 112a has the same functional configuration as controller (first controller) 102a.

Second communication device 110a is installed in, for example, the same house as first communication device 100a and is electrically connected to distribution switchboard 201, which is electrically connected to system power supply 600, and load device 301 such as an electrical appliance via power lines. Moreover, second communication device 110a is connected so as to communicate with distribution switchboards 200 and 201 and load devices 300 and 301 via communication lines. Second communication device 110a has the DHCP server function and can allocate IP addresses to, for example, distribution switchboard 201 and load device 301 on network 400.

### [2-2. Operation]

First communication device 100a and second communication device 110a having the above configurations are provided in communication system 700a. The operations of communication system 700a will be discussed below. The same steps as those of embodiment 1 are indicated by the same numerals and the explanation thereof may be omitted.

First communication device 100a transmits the first confirmation signal through first communicator 101a. If it is determined that the DHCP server is absent on network 400, the DHCP server function is started such that first communication device 100a acts as a DHCP server. Furthermore, first communication device 100a repeatedly transmits the second confirmation signal through communicator 101. If it is determined that the DHCP server is present on network 400, the IP address allocated to communication device 100a from the DHCP server is acquired and the DHCP server function is stopped to prevent communication device 100a from acting as a DHCP server. Moreover, the third confirmation signal is transmitted through communicator 101a after the elapse of the predetermined time. The operations will be specifically discussed below.

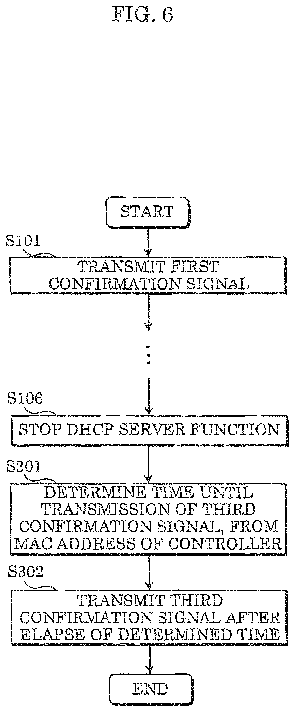

FIG. 6 is a flowchart showing a specific example of the steps of calculating the transmission time of the confirmation signal for confirming the presence or absence of the DHCP server on network 400 by the communication device of embodiment 2. First communication device 100a and second communication device 110a perform the same operations and thus only first communication device 100a will be discussed below.

Controller 102a broadcasts the first confirmation signal to network 400 through communicator 101a (step S101). This allows controller 102a to confirm the presence or absence of the fixed DHCP server or the other communication device having started the DHCP server function on network 400. Controller 102a repeatedly transmits, for example, DHCP DISCOVER as the first confirmation signal.

Subsequently, controller 102a performs the operations of steps S102 to S105 in FIG. 2.

If the second response signal is received (Yes at step S105 in FIG. 2), controller 102a determines that the other communication device having started the DHCP server function is present on network 400, and then controller 102 acquires the IP address included in the second response signal and stops the DHCP server function (step S106).

Controller 102a then determines a time until the transmission of the third confirmation signal, from the MAC address of controller 102a (communication device 100a) (step S301).

Subsequently, controller 102a transmits the third confirmation signal through communicator 101a after the elapse of the predetermined time that is determined in step S301 (step S302).

The operations are also performed by second communication device 110a. Thus, the communication devices provided in communication system 700a can transmit the third confirmation signal at different times if the DHCP server functions are simultaneously stopped.

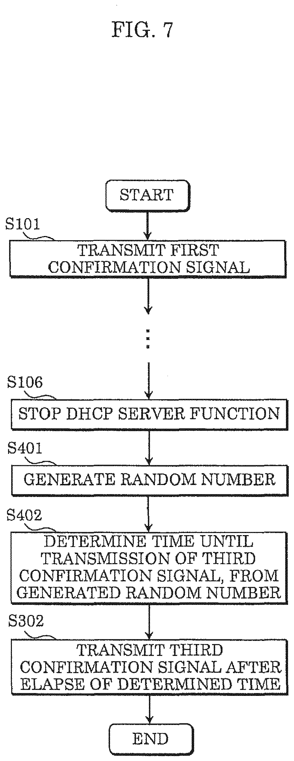

FIG. 7 is a flowchart showing another specific example of the steps of calculating the transmission time of the confirmation signal for confirming the presence or absence of the DHCP server on network 400 by the communication device of embodiment 2. First communication device 100a and second communication device 110a perform the same operations and thus only first communication device 100a will be discussed below.

Controller 102a broadcasts the first confirmation signal to network 400 through communicator 101a (step S101).

Subsequently, controller 102a performs the operations of steps S102 to S105 in FIG. 2.

If the second response signal is received (Yes at step S105 in FIG. 2), controller 102a determines that the other communication device having started the DHCP server function is present on network 400, and then controller 102 acquires the IP address included in the response signal and stops the DHCP server function (step S106).

Thereafter, controller 102a generates a random number (step S401). For example, controller 102a in step S401 generates a random number according to the MAC address of communication device 100.

Controller 102a then determines a time until the transmission of the third confirmation signal, from the random number generated in step S401 (step S402). Specifically, controller 102a in step S402 determines a time from the reception of the second response signal from the other communication device to the transmission of the third confirmation signal, based on the random number generated in step S401.

Subsequently, controller 102a transmits the third confirmation signal through communicator 101a after the elapse of the time determined in step S402 (step S302).

The operations are also performed by second communication device 110a. Also in this case, the communication devices provided in communication system 700a can transmit the confirmation signal at different times if the DHCP server functions are simultaneously stopped.

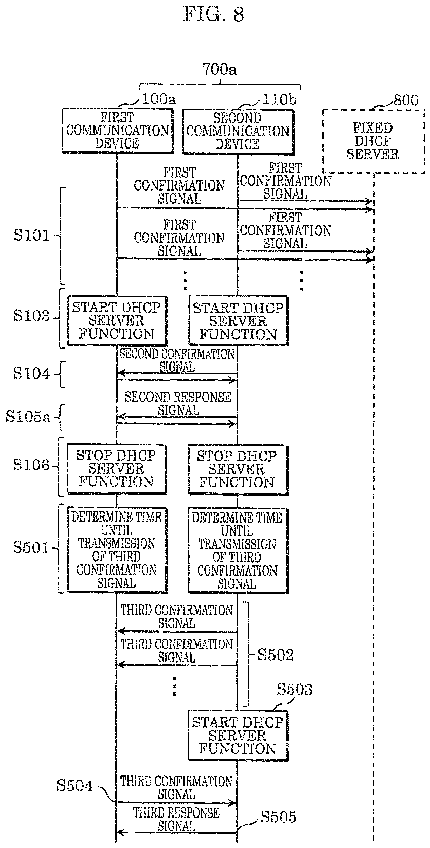

FIG. 8 is a sequence showing another specific example of the steps of transmitting the confirmation signal by the communication device having stopped the DHCP server function to be performed by the communication devices provided in communication system 700a according to embodiment 2. In FIG. 8, in substantially the same steps as those of the flowcharts of FIGS. 2, 6, and 7, the same reference numerals are used and the explanation of the steps may be omitted.

First communication device 100a and second communication device 110a repeatedly broadcast the first confirmation signal to network 400 (step S101). Thus, first communication device 100a and second communication device 110a confirm the presence or absence of fixed DHCP server 800 or the other communication device having started the DHCP server function on network 400. In embodiment 2, fixed DHCP server 800 is absent on network 400.

Subsequently, first communication device 100a and second communication device 110a determine whether or not the first response signal is received (step S102 in FIG. 2).

Thereafter, if the first response signal is not received (No at step S102 in FIG. 2), first communication device 100a and second communication device 110a determine that fixed DHCP server 800 or the other communication device having started the DHCP server function is absent on network 400, and then the communication devices start the DHCP server function (step S103).

First communication device 100a and second communication device 110a then broadcast the second confirmation signal to network 400 (step S104).

If the second response signal is received (step S105a), first communication device 100a and second communication device 110a determine that the other communication device having started the DHCP server function is present on network 400, and then the communication devices acquire the IP address included in the second response signal and stop the DHCP server function (step S106).

Subsequently, first communication device 100a and second communication device 110a each determine a time until the transmission of the third confirmation signal (step S501). Specifically, first communication device 100a and second communication device 110a in step S501 each determine the time until the transmission of the third confirmation signal, by performing step S301 in FIG. 6. Alternatively, first communication device 100a and second communication device 110a in step S501 each determine the time until the transmission of the third confirmation signal, by performing step S401 and step S402 in FIG. 7.

Subsequently, first communication device 100a and second communication device 110a each determine a predetermined time until the transmission of the confirmation signal, from the random number generated in step S401 (step S402).

First communication device 100a and second communication device 110a then transmit the third confirmation signal after the elapse of the time determined in step S501. In FIG. 7, the time determined by second communication device 110a is shorter than that of first communication device 100a. Second communication device 110a repeatedly transmits the third confirmation signal to first communication device 100a after the elapse of the time determined in step S501 (step S502).

Thereafter, if the third response signal is not received, second communication device 110a determines that first communication device 100a has not started the DHCP server function, and starts the DHCP server function (step S503).

First communication device 100a transmits the third confirmation signal to second communication device 110a after the elapse of the time determined in step S501 (step S504).

At this point, second communication device 110a has started the DHCP server function in step S503 and thus transmits the third response signal to first communication device 100a (step S505).

First communication device 100a receives the third response signal from second communication device 110a. Thus, first communication device 100a does not start the DHCP server function.

In step S504, the third confirmation signal transmitted by first communication device 100a and second communication device 110a may be DHCP DISCOVER for requesting an IP address but is preferably DHCP REQUEST for requesting permission to use the IP address acquired in step S105a. In step S505, second communication device 110a may transmit DHCP ACK to first communication device 100a as the third response signal in response to DHCP REQUEST. Thus, another IP address is not allocated to first communication device 100a. This prevents the acquisition of duplicate IP addresses by first communication device 100a.

### [2-3. Effects]

As described above, in communication system 700a according to embodiment 2, first communication device 100a and second communication device 110a transmit the third confirmation signal at different times.

For example, during the transmission control of the third confirmation signal, controller 102a may transmit the third confirmation signal through communicator 101 after an elapse of a time corresponding to a MAC address of communication device 100a from the reception of the second response signal.

With this configuration, even if a plurality of communication devices (first communication device 100a and second communication device 110a in embodiment 2) on the same network 400, any one of the communication devices starts the DHCP server function prior to the other. This prevents simultaneous starting of the DHCP server functions of the communication devices provided in communication system 700a.

Furthermore, for example, during the transmission control of the third confirmation signal, controller 102a may generate a random number and transmit the third confirmation signal through communicator 101 after an elapse of a time corresponding to the random number.

With this configuration, even if a plurality of communication devices on the same network 400, any one of the communication devices is likely to start the DHCP server function prior to the other. This further prevents simultaneous starting of the DHCP server functions of the communication devices provided in communication system 700a.

### (Embodiment 3)

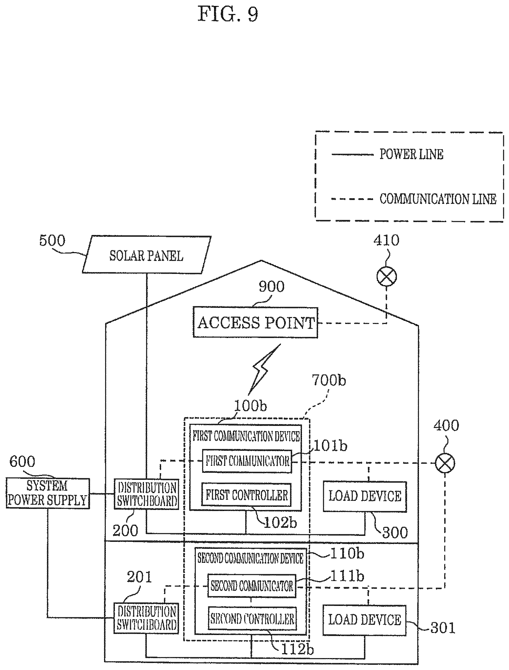

Referring to FIG. 9, embodiment 3 will be described below. Substantially the same configurations as embodiments 1 and 2 are indicated by the same reference numerals and the redundant explanation thereof may be omitted or simplified.

### [3-1. Configuration]

FIG. 9 is a block diagram showing the configuration of a system including communication devices according to embodiment 3.

Communication device (first communication device) 100b is electrically connected to distribution switchboard 200, which is electrically connected to solar panel 500 and system power supply 600, and load device 300 such as an electrical appliance via power lines. Communication device 100b is connected so as to communicate with distribution switchboards 200 and 201 and load devices 300 and 301 via communication lines. Communication device 100b has a DHCP server function and can allocate IP addresses to distribution switchboards 200 and 201 and load devices 300 and 301 on network 400. Communication device 100b is a so-called house controller applied to a HEMS that acquires, for example, the power consumption of load device 300 or the like and notifies a user of communication device 100b of the power consumption.

Distribution switchboards 200 and 201 and load devices 300 and 301 are client devices that acquire IP addresses from one of first communication device 100b or second communication device 110b described later, each having started the DHCP server function.

Communications between communication device 100b and distribution switchboards 200 and 201 and load devices 300 and 301 are not limited to communications via communication lines. For example, communication device 100b may be connected to distribution switchboards 200 and 201 and load devices 300 and 301 by radio communications.

Communication device 100b is connected so as to communicate with access point 900. Access point 900 can communicate with external network 410, e.g., a public wireless LAN (Local Area Network) or the Internet unlike network 400. In other words, communication device 100b is connected so as to communicate with the external network via access point 900. Specifically, communicator (first communicator) 101b is connected so as to communicate with external network 410 different from network 400.

Access point 900 is a communication device that enables communication device 100b to communicate with external network 410. Communication device 100b and access point 900 have the communication function of, for example, Wi-Fi (registered trademark). Communication device 100b and access point 900 are connected so as to communicate with each other.

Communications of communication device 110b with external network 410 are enabled or disabled depending on whether the DHCP server function has started or not.

Communications between communication device 100b and access point 900 are not limited to wireless communications. For example, communication device 100b and access point 900 may be connected to each other through wire communications via communication lines.

Communication device 100b includes communicator (first communicator) 101b and controller (first controller) 102b.

Like communicator 101, communicator 101b acts as a communication interface for communications between communication device 100b and the other communication device (e.g., second communication device 110b), distribution switchboard 200, and load device 300 on network 400. Moreover, communicator 101b is connected so as to communicate with external network 410 different from network 400.

Controller 102b is a controller for controlling the DHCP server function. Controller 102b is implemented by, for example, a CPU and control programs stored in memory (not shown) such as ROM, RAM, an HDD, and an SSD in communication device 100b.

For example, in response to an IP address request from load device 300, controller 102b allocates IP addresses stored in the memory to load device 300.

Controller 102b transmits a first confirmation signal to the other communication device (second communication device 110b in the present embodiment) through communicator 101b. Specifically, controller 102b broadcasts the first confirmation signal to network 400 through communicator 101b. If a first response signal is not received from second communication device 110b, controller 102b determines that the other communication device having started the DHCP server function is absent on network 400, and then starts the DHCP server function.

Furthermore, controller 102b transmits a second confirmation signal to the other communication device through communicator 101a. If a second response signal is received, controller 102b stops the DHCP server function. Specifically, controller 102b broadcasts the second confirmation signal to network 400 through communicator 101b. If the second response signal is received, controller 102b stops the DHCP server function.

Moreover, controller 102b controls the transmission of a third confirmation signal to the other communication device through communicator 101b, based on the second response signal. For example, like controller 102 according to embodiment 1 or controller 102a according to embodiment 2, controller 102b transmits the third confirmation signal to the other communication device through communicator 101b if controller 102b determines that the third confirmation signal is to be transmitted based on the MAC address of controller 102b or after the elapse of a predetermined time from the reception time of the second response signal.

If the DHCP server function is started, controller 102b provided in communication device 100b according to embodiment 3 allows communicator 101b to communicate with external network 410. If the DHCP server function is not started, controller 102b does not allow communicator 101b to communicate with external network 410.

Communication system 700b includes the communication devices of embodiment 3 on the same network 400. The number of communication devices is two in communication system 700b according to embodiment 3. The number of communication devices is not particularly limited. In the following explanation, the two communication devices provided in communication system 700b according to embodiment 3 will be referred to as first communication device 100b and second communication device 110b.

Second communication device 110b is disposed on network 400 like first communication device 100b and is connected so as to communicate with first communication device 100b. Second communication device 110b includes second communicator 111b and second controller 112b. Second communicator 111b is a communication interface having the same functional configuration as communicator (first communicator) 101b. Moreover, second controller 112b is a controller implemented by a CPU and a control program stored in memory (not shown) provided in second communication device 110b. Second controller 112b has the same functional configuration as controller (first controller) 102b.

Second communication device 110b is installed in, for example, the same house as first communication device 100b and is electrically connected to distribution switchboard 201, which is electrically connected to system power supply 600, and load device 301 such as an electrical appliance via power lines. Moreover, second communication device 110b is connected so as to communicate with distribution switchboards 200 and 201 and load devices 300 and 301 via communication lines. Second communication device 110b has the DHCP server function and can allocate IP addresses to, for example, distribution switchboard 201 and load device 301 on network 400.

Like first communication device 100b, second communication device 110b is connected so as to communicate with access point 900. Access point 900 can communicate with external network 410, e.g., the Internet that is different from network 400. In other words, second communication device 110b is connected so as to communicate with external network 410 via access point 900. Specifically, communicator 111b is connected so as to communicate with external network 410 different from network 400.

Communications of communication device 110b with external network 410 are enabled or disabled depending on whether the DHCP server function has been started or not. Specifically, if the DHCP server function is started, controller 112b allows communicator 111b to communicate with external network 410 like controller 102b. If the DHCP server function is not started, controller 112b does not allow communicator 111b to communicate with external network 410. Second communication device 110b and access point 900 have the communication function of, for example, Wi-Fi (registered trademark). Second communication device 110b and access point 900 are connected so as to communicate with each other.

Communications between second communication device 110b and access point 900 are not limited to wireless communications. For example, second communication device 110b and access point 900 may be connected to each other by wire communications via communication lines.

### [3-2. Operation]

First communication device 100b and second communication device 110b having the above configurations are provided in communication system 700b. The operations of communication system 700b will be discussed below. The same steps as those of embodiment 1 are indicated by the same numerals and the explanation thereof may be omitted.

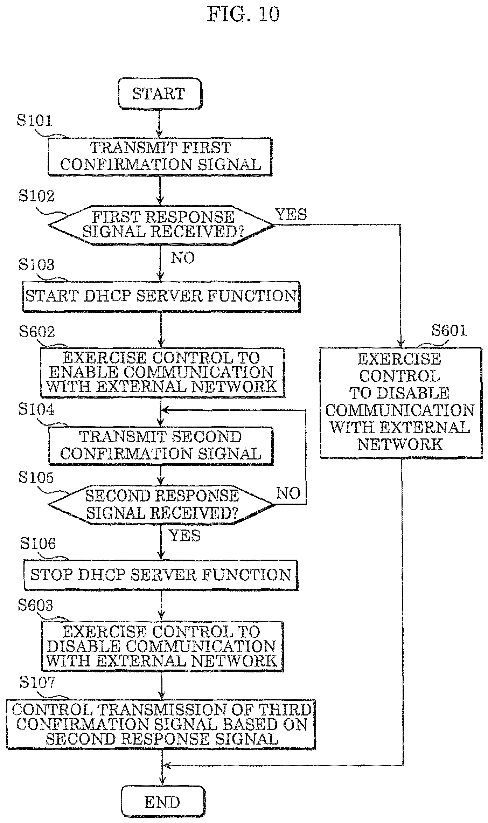

FIG. 10 is a flowchart showing a specific example of the steps of switching states of communications with access point 900 by the communication device of embodiment 3. First communication device 100b and second communication device 110b perform the same operations and thus only first communication device 100b will be discussed below.

Controller 102b broadcasts the first confirmation signal to network 400 through communicator 101b (step S101).

Subsequently, controller 102b determines whether or not the first response signal is received in response to the first confirmation signal (step S102). If the first response signal is received (Yes at step S102), controller 102b determines that the other communication device having started the DHCP server function is present, and then controller 102b acquires the IP address included in the first response signal.

Since controller 102b determines that the other communication device has started the DHCP server, controller 102b does not start the DHCP server function and disables communications of communicator 101b with external network 410 (step S601). Specifically, in step S601, controller 102b prohibits communicator 101b from communicating with access point 900, disabling communications with external network 410. In this case, communicator 101b is controlled to disable communications with external network 410. This control prohibits, for example, signal transmission to access point 900 and the processing of the signal from access point 900. The specific contents of the control are not particularly limited as long as communications with external network 410 are disabled or are not carried out.

If the first response signal is not received (No at step S102), controller 102b determines that the fixed DHCP server or the other communication device having started the DHCP server function is absent on network 400, and then controller 102b starts the DHCP server function (step S103).

Since the DHCP server is started, controller 102b enables communications of communicator 101b with external network 410 (step S602). Specifically, in step S602, controller 102b enables the transmission and reception of signals to and from access point 900 and the processing of the signal received from access point 900. In this way, controller 102b enables or disables communications between communicator 101b and access point 900 depending on whether the DHCP server function has been started or not.

Then, controller 102b broadcasts the second confirmation signal to network 400 through communicator 101b (step S104).

Subsequently, controller 102b determines whether or not the second response signal is received in response to the second confirmation signal (step S105). If the second response signal is not received (No at step S105), controller 102b broadcasts the second confirmation signal to network 400 through communicator 101 (step S104).

If the second response signal is received (Yes at step S105), controller 102b determines that the other communication device having started the DHCP server function is present on network 400, and then controller 102b acquires the IP address included in the second response signal and stops the DHCP server function (step S106).

Controller 102b then stops the DHCP server function in step S106 so as to disable communications of communicator 101b with external network 410 (step S603).

Subsequently, controller 102b controls the transmission of the third confirmation signal to the MAC address of the source of the second response signal through communicator 101b based on the second response signal received in step S105 (step S107). In step S107, for example, controller 102b may perform the operations of steps S201 and S202 or S202a in FIG. 3 like controller 102 according to embodiment 1. In step S107, for example, controller 102b may perform the operations of steps S301 and S302 in FIG. 6 or the operations of steps S401 to S302 in FIG. 7 like controller 102a according to embodiment 2.

The operations are also performed by second communication device 110b.

### [3-3. Effects]

In communication system 700b according to embodiment 3, communication device 100b according to embodiment 3 is added to the functional configuration of communication device 100 according to embodiment 1. Furthermore, communicator 101b in communication device 100b is connected to external network 410 different from network 400. Controller 102b in communication device 100b enables communications of communicator 101b with external network 410 when the DHCP server function is started, and disables communications of communicator 101b with external network 410 when the DHCP server function is not started.

With this configuration, if a plurality of communication devices (first communication device 100b and second communication device 110b in embodiment 3) are connected to access point 900 connected to external network 410 on the same network 400, only any one of the communication devices enables communications with external network 410. Thus, this configuration can prevent simultaneous communications of the communication devices in communication system 700b with external network 410, thereby preventing crosstalk at, for example, access point 900. This configuration further prevents unnecessary signal transmission and reception, for example, the transmission of a signal to access point 900 after the same signal is received by the communication devices from the same load device (e.g., load device 300) or the reception of a signal by the communication devices after the signal is received by access point 900 through external network 410.

### (Other Embodiments)

Embodiments 1, 2, and 3 were illustrated as techniques disclosed in the present application. However, the techniques of the present disclosure are not limited to the embodiments. The present disclosure is also applicable to the embodiments optionally involving modification, replacement, addition, and omission. The constituent elements described in the embodiments may be combined to achieve another embodiment.

Other embodiments will be discussed below.

For example, in embodiment 1, first communication device 100 and second communication device 110 in communication system 700 are electrically connected to different distribution switchboards (distribution switchboard 200 and distribution switchboard 201). However, the communication system according to the present embodiment is not limited to this configuration.

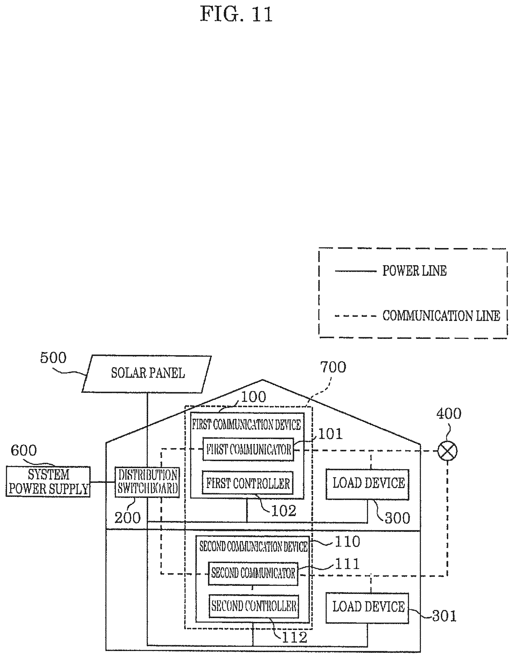

FIG. 11 is a block diagram showing the configuration of a system including communication devices according to another embodiment.

As shown in FIG. 11, unlike in embodiments 1, 2, and 3, first communication device 100 and second communication device 110 are electrically connected to the same distribution switchboard 202 so as to carry out communications. Thus, also in the communication system that allows the communication devices to control the same device, the effects of communication device 100 and communication system 700 can be obtained.

The control methods of embodiments 1, 2, and 3 can be implemented by computer programs. The programs may be recorded in computer-readable recording media such as a CD-ROM or may be distributed through communication channels such as the Internet.

Moreover, communication standards used for communications in the embodiments are not particularly limited. For example, Wi-Fi (registered trademark), Bluetooth (registered trademark), BLE (Bluetooth (registered trademark) Low Energy), ANT (registered trademark), Zigbee (registered trademark), or original communication standards may be used.

As described above, the techniques of the present disclosure were illustrated as the embodiments. The accompanying drawings and detailed explanations were provided for the illustration.

Thus, the constituent elements described in the accompanying drawings and the detailed description may include the constituent elements not required for solving the problem but for illustrating the techniques as well as the constituent elements required for solving the problem. For this reason, the constituent elements described in the accompanying drawings and the detailed description should not be always regarded as being necessary for solving the problem.

The embodiments illustrate the techniques of the present disclosure and thus claims or the equivalent scope may involve modification, replacement, addition, and omission in various ways. For example, the present disclosure includes a configuration implemented by optionally combining the constituent elements and functions of the embodiments.

### INDUSTRIAL APPLICABILITY

The present disclosure is applicable to a house controller for controlling household electrical appliances. The present disclosure can prevent the absence of communication devices having started DHCP server functions on a network if the communication devices having the DHCP server functions are present on the same network. Alternatively, the present disclosure is applicable to a house controller system including the multiple house controllers on the same network.

### REFERENCE MARKS IN THE DRAWINGS

100, 100a, 100b communication device (first communication device)
101, 101a, 101b communicator (first communicator)
102, 102a, 102b controller (first controller)
110, 110a, 110b second communication device
111, 111a, 111b second communicator
112, 112a, 112bsecond controller
200, 201, 202 distribution switchboard
300, 301 load device
400 network
410 external network
500 solar panel
600 system power supply
700, 700a, 700b communication system
800 fixed DHCP server
900 access point

## Claims

1. A communication device in a communication system including a plurality of communication devices on a network, the plurality of communication devices each having a Dynamic Host Configuration Protocol (DHCP) server function of allocating an Internet Protocol (IP) address, the communication device comprising:
a communicator that transmits a confirmation signal for confirming presence or absence of an other communication device having the DHCP server function started on the network; and
a controller that controls the DHCP server function,
wherein the controller:
transmits a first confirmation signal to the other communication device through the communicator;
starts the DHCP server function and transmits a second confirmation signal to the other communication device through the communicator when a first response signal is not received from the other communication device in response to the first confirmation signal;
stops the DHCP server function when a second response signal is received in response to the second confirmation signal; and
performs a transmission control of a third confirmation signal to the other communication device through the communicator, based on the second response signal.

2. The communication device according to claim 1,
wherein the second response signal includes a Media Access Control (MAC) address of the other communication device which has transmitted the second response signal, and
the controller performs the transmission control according to the MAC address.

3. The communication device according to claim 2,
wherein, during the transmission control, the controller transmits the third confirmation signal through the communicator when the MAC address is larger than a MAC address of the communication device.

4. The communication device according to claim 3,
wherein, during the transmission control, the controller transmits the third confirmation signal through the communicator after an elapse of a predetermined time when the MAC address is smaller than the MAC address of the communication device.

5. The communication device according to claim 2,
wherein, during the transmission control, the controller transmits the third confirmation signal through the communicator when the MAC address is smaller than a MAC address of the communication device.

6. The communication device according to claim 5,
wherein, during the transmission control, the controller transmits the third confirmation signal through the communicator after an elapse of a predetermined time when the MAC address is larger than the MAC address of the communication device.

7. The communication device according to claim 1,
wherein, during the transmission control, the controller transmits the third confirmation signal through the communicator after an elapse of a time corresponding to a MAC address of the communication device from the reception of the second response signal.

8. The communication device according to claim 1,
wherein, during the transmission control, the controller generates a random number and transmits the third confirmation signal through the communicator after an elapse of a time corresponding to the random number.

9. The communication device according to any one of claims 1 to 8,
wherein the communicator is connected to an external network different from the network,
the controller enables communications of the communicator with the external network when the DHCP server function is started, and
the controller disables communications of the communicator with the external network when the DHCP server function is not started.

10. A communication system, comprising a plurality of communication devices each of which is the communication device according to any one of claims 1 to 9 on a network.
